# EUROPÄISCHE PATENTANMELDUNG

(11) **EP 2 784 040 A1**
(43) Veröffentlichungstag der Anmeldung: **01.10.2014**
(21) Anmeldenummer: 13161135.2
(22) Anmeldetag: 26.03.2013
(51) Int. Cl.: C04B 28/14, C04B 28/16, C04B 40/00, C04B 20/10

(54) **Schnell suspendierbare pulverförmige Zusammensetzung**

(71) Anmelder: BASF SE, 67056 Ludwigshafen (DE)
(72) Erfinder: Hofheinz, Christoph, 83071 Stephanskirchen (DE); Bichler, Manfred, 84549 Engelsberg (DE); Schinabeck, Michael, 83352 Altenmarkt (DE); Wiedemann, Markus, 86456 Gablingen (DE); Heichele, Thomas, 86399 Bobingen (DE); Stohr, Werner, 86161 Augsburg (DE); Flakus, Silke, Dr., 85560 Ebersberg (DE)
(74) Vertreter: Gastner, Thomas

(57) **Zusammenfassung**

Die Erfindung betrifft eine pulverförmige Zusammensetzung umfassend, bezogen auf die Gesamtmasse der Zusammensetzung A) mindestens 20 Gew.-% eines auf Calciumsulfat basierenden Bindemittels und B) 0,01 bis 4 Gew.-%, mindestens eines Copolymers, welches erhältlich ist durch Polymerisation einer Mischung von Monomeren, umfassend (I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und (II) mindestens ein ethylenisch ungesättigtes Monomer mit einem Polyalkylenoxid-Rest, wobei die pulverförmige Zusammensetzung durch ein Verfahren herstellbar ist bei dem eine Pulverkomponente, umfassend ein auf Calciumsulfat basierendes Bindemittel, mit einer flüssigen wasserhaltigen, weniger als 30 Gew.-% eines organischen Lösungsmittels enthaltenden Komponente, umfassend B) in Kontakt gebracht wird, wobei die flüssige wasserhaltige Komponente in einer Menge von weniger als 20 Gew.-% eingesetzt wird, bezogen auf die Gesamtmasse der pulverförmigen Zusammensetzung und die pulverförmige Zusammensetzung kein hydraulisches Bindemittel umfasst. Weiterhin wird eine Bindemittelzusammensetzung umfassend eine erfindungsgemäße pulverförmige Zusammensetzung offenbart.

## Beschreibung

Die Erfindung betrifft eine schnell suspendierbare pulverförmige Zusammensetzung, enthaltend ein Calciumsulfat basierendes Bindemittel und mindestens ein Copolymer.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt. Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n=0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

DE 3530258 beschreibt die Verwendung von wasserlöslichen Natriumnaphthalinsulfonsäure-Formaldehydkondensaten als Zusatzmittel für anorganische Bindemittel und Baustoffe. Diese Zusatzmittel werden zur Verbesserung der Fließfähigkeit der Bindemittel wie z. B. Zement, Anhydrit oder Gips sowie den damit hergestellten Baustoffen beschrieben.

Neben den rein anionischen Fließmitteln, die im wesentlichen Carbonsäure- und Sulfonsäuregruppen enthalten, werden als neuere Gruppe von Fließmitteln schwach anionische Kammpolymere beschrieben, die üblicherweise anionische Ladungen an der Hauptkette tragen und nichtionische Polyalkylenoxidseitenketten enthalten.

WO 01/96007 beschreibt diese schwach anionischen Fließ- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

Ziel der Zugabe von Fließmitteln in der Bauindustrie ist entweder die Plastizität des Bindemittelsystems zu erhöhen oder die benötigte Wassermenge bei gleichen Verarbeitungsbedingungen zu reduzieren.

Es hat sich gezeigt, dass Fließmittel auf Basis von Ligninsulfonat, Melaminsulfonat und Polynaphthalinsulfonat den schwach anionischen, polyalkylenoxidhaltigen Copolymeren in ihrer Wirksamkeit deutlich unterlegen sind. Diese Copolymere werden auch als Polycarboxylatether (PCE) bezeichnet. Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden.

Dadurch kann entweder die benötige Menge Wasser für das Einstellen einer bestimmten Konsistenz gegenüber den klassischen Fließmitteln reduziert werden oder aber die Plastizität der feuchten Baustoffmischung wird durch die Zugabe der Polycarboxylatether so weit reduziert, dass selbstverdichtender Mörtel bei niedrigen Wasser/Bindemittel Verhältnissen hergestellt werden kann.

Weiterhin sind aus der DE 199 05 488 pulverförmige Polymerzusammensetzungen auf Basis von Polyethercarboxylaten bekannt, wobei diese 5 bis 95 Gew.-% des wasserlöslichen Polymers und 5 bis 95 Gew.-% eines feinteiligen mineralischen Trägermaterials umfassen. Die Produkte werden durch in Kontakt bringen des mineralischen Trägermaterials mit einer Schmelze oder einer wässrigen Lösung des Polymers hergestellt. Als Vorteile dieses Produktes wird im Vergleich zu sprühgetrockneten Produkten eine deutlich erhöhte Verklebungs- und Verbackungsresistenz genannt.

Aus der WO 2006/027363 ist ein Verfahren zur Herstellung eines beschichteten Grundstoffs für eine hydraulische Zusammensetzung bekannt. In den Beispielen wird unter anderem die Beschichtung eines Portlandzements mit 1 % einer wässrigen Polycarboxylatether-Lösung, bezogen auf das Bindemittelgewicht, offenbart.

Dispergiermittel auf Basis von Polycarboxylatethern und deren Derivate werden entweder als Feststoff in Pulverform oder als wässrige Lösung angeboten. Pulverförmige Polycarboxylatether können beispielsweise einem Werktrockenmörtel bei dessen Herstellung zugemischt werden. Beim anmachen des Werktrockenmörtels mit Wasser lösen sich die Polycarboxylatether und können nachfolgend ihre Wirkung entfalten.

Alternativ ist es auch möglich, Polycarboxylatether oder deren Derivate der anorganischen Feststoffsuspension in gelöster Form zuzusetzen. Insbesondere wird das Dispergiermittel direkt in das Anmachwasser dosiert.

Alle bisher bekannten Verfahren Fließmittel in eine Feststoffsuspension auf Basis eines Calciumsulfat basierenden Bindemittels einzubringen haben jedoch den Nachteil, dass die dispergierende Wirkung sich nicht unmittelbar nach Zugabe des Anmachwassers entfaltet. Unabhängig davon ob das Dispergiermittel als Pulver oder in wässriger Lösung mit dem Anmachwasser zugesetzt wird, kann es beispielsweise bei einem Trockenmörtel -je nach Wasser zu Bindemittel Verhältnis bzw. Wasseranspruch - über 100 Sekunden dauern, bis man nach Zugabe des Anmachwassers unter starkem Rühren eine homogene Suspension erhält. Dies ist insbesondere bei der Verwendung von Mischpumpen problematisch.

Aufgabe der vorliegenden Erfindung war es demzufolge, pulverförmige Zusammensetzungen auf Basis von Calciumsulfat basierenden Bindemittels zur Verfügung zu stellen, die sich schneller mit Wasser homogen dispergieren lassen, als dies mit den bisher bekannten Zusammensetzungen möglich war.

Gelöst wurde diese Aufgabe durch eine pulverförmige Zusammensetzung umfassend, bezogen auf die Gesamtmasse der Zusammensetzung
A) mindestens 20 Gew.-%, insbesondere mindestens 40 Gew.-%, bevorzugt mindestens 60 Gew.-% und insbesondere bevorzugt mindestens 80 Gew.-% eines auf Calciumsulfat basierenden Bindemittels und
B) 0,01 bis 4 Gew.-%, insbesondere 0,05 bis 3, besonders bevorzugt 0,1 bis 2 Gew.-% mindestens eines Copolymers,
   welches erhältlich ist durch Polymerisation einer Mischung von Monomeren, umfassend
   (I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und
   (II) mindestens ein ethylenisch ungesättigtes Monomer mit einem Polyalkylenoxid-Rest,
wobei die pulverförmige Zusammensetzung durch ein Verfahren herstellbar ist bei dem eine Pulverkomponente, umfassend ein auf Calciumsulfat basierendes Bindemittel, mit einer flüssigen wasserhaltigen, weniger als 30 Gew.-% eines organischen Lösungsmittels enthaltenden Komponente, umfassend B) in Kontakt gebracht wird, wobei die flüssige wasserhaltige Komponente in einer Menge von weniger als 20 Gew.-%, insbesondere weniger als 15 Gew.-%, bevorzugt weniger als 10 Gew.-%, und insbesondere bevorzugt weniger als 5 Gew.-% eingesetzt wird, bezogen auf die Gesamtmasse der pulverförmigen Zusammensetzung und die pulverförmige Zusammensetzung kein hydraulisches Bindemittel umfasst.

Überraschend hat sich hierbei ergeben, dass nicht nur die gestellte Aufgabe in vollem Umfang gelöst werden konnte, sondern dass die pulverförmige Zusammensetzung neben der hervorragenden Dispergierbarkeit gleichzeitig ausgezeichnete Verarbeitungseigenschaften aufweist, wobei auch die Pumpbarkeit verbessert und die erforderliche elektrische Leistung beim Mischprozess verringert werden konnte. Insbesondere wurde auch gefunden, daß die erfindungsgemäße pulverförmige Zusammensetzung eine geringere Veränderung des Wasserbedarfs über die Zeit aufweist, was für viele Einsatzzwecke von großem Vorteil ist.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (I) durch mindestens eine der folgenden allgemeinen Formeln aus der Gruppe (la), (Ib) und (Ic) repräsentiert:

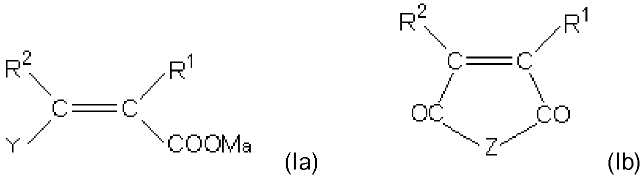

Bei dem Mono- oder Dicarbonsäure-Derivat (la) und dem in cyclischer Form vorliegenden Monomer (Ib), wobei Z = O (Säureanhydrid) oder NR² (Säureimid) darstellen, steht R¹ und R² unabhängig voneinander für Wasserstoff oder einen aliphatischen Kohlenwasserstoffrest mit 1 bis 20 C-Atomen, vorzugsweise eine Methylgruppe. Y bedeutet H, -COOMₐ, -CO-O(C_{q}H_{2q}O)ᵣ-R³, -CO-NH-(C_{q}H_{2q}O)ᵣ-R³.

M bedeutet Wasserstoff, ein ein- oder zweiwertiges Metallkation, vorzugsweise Natrium-, Kalium-, Calcium- oder Magnesium-Ion, weiterhin Ammonium oder ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R³ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl - oder Naphthylreste anzusehen, die insbesondere noch durch Hydroxyl-, Carboxyl- oder Sulfonsäuregruppen substituiert sein können.

Die folgende Formel stellt das Monomer (Ic) dar:

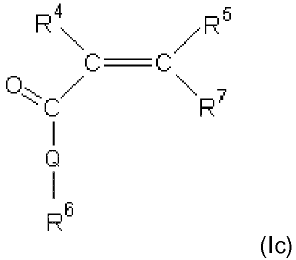

Hierbei steht R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen. Q kann gleich oder verschieden sein und wird durch NH, NR³ oder O repräsentiert, wobei R³ die oben genannte Bedeutung besitzt.

Weiterhin ist R⁶ gleich oder verschieden und wird durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3 repräsentiert.

R⁷ bedeutet H, -COOMₐ, -CO-O(C_{q}H_{2q}O)ᵣ-R³, -CO-NH-(C_{q}H_{2q}O)ᵣ-R³, wobei Mₐ, R³, q und r die oben genannte Bedeutungen besitzen.

R⁸ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Weiterhin bevorzugt im Sinne der vorliegenden Erfindung wird das ethylenisch ungesättigte Monomer (II) durch folgende allgemeine Formeln repräsentiert: 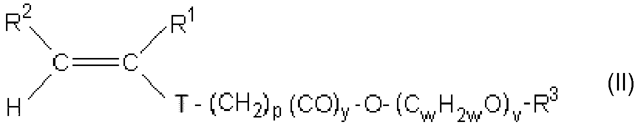 wobei p für eine ganze Zahl zwischen 0 und 6 steht, y für 0 oder 1, v für eine ganze Zahl zwischen 3 und 500 und w unabhängig voneinander für jede (C_{w}H_{2w}O)-Einheit gleich oder verschieden für eine ganze Zahl zwischen 2 und 18 sowie T für Sauerstoff oder eine chemische Bindung. R¹, R² und R³ besitzen die oben genannte Bedeutung.

In einer bevorzugten Ausführungsform stehen in der allgemeine Formeln (II) p für eine ganze Zahl zwischen 0 und 4, v für eine ganze Zahl zwischen 5 und 250 und w unabhängig voneinander für jede (C_{w}H_{2w}O)-Einheit gleich oder verschieden für 2 oder 3.

In einer besonders bevorzugten Ausführungsform stehen in der allgemeinen Formel (II) p für 4, v für eine ganze Zahl zwischen 10 und 120 und w unabhängig voneinander für jede (C_{w}H_{2w}O)-Einheit gleich oder verschieden für 2 oder 3, T für Sauerstoff und y für 0. Hierbei ist es besonders bevorzugt, wenn zumindest ein Teilbereich durch ein statistisches Ethylenoxid/Propylenoxid-Copolymer gebildet wird und der molare Anteil an Propylenoxid-Einheiten bevorzugt 10 bis 30 mol-%, bezogen auf die Summe der Ethylenoxid- und Propylenoxid-Einheiten des statistischen Ethylenoxid/Propylenoxid-Copolymers oder des entsprechenden Teilbereichs beträgt.

Insbesondere kann es sich bei dem mindestens einen ethylenisch ungesättigten Monomer mit einem Polyalkylenoxid-Rest (II) um eine Verbindung der Formel (III) handeln. Der Block A besteht aus einer Polyethylenoxid-Einheit, wobei n bevorzugt eine Zahl von 20 bis 30 repräsentiert. Der Block B besteht aus einer statistischen Ethylenoxid/Propylenoxid-Copolymer-Einheit, wobei k bevorzugt eine Zahl von 5 bis 10 und I bevorzugt eine Zahl von 20 bis 35 repräsentiert.

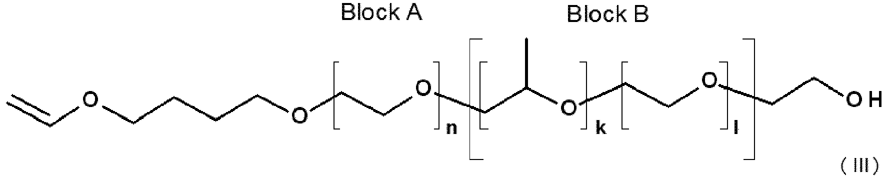

In einer weiterhin bevorzugten Ausführungsform der Erfindung handelt es sich bei dem ethylenisch ungesättigte Monomer (II) um mindestens eine Verbindung der allgemeinen Formeln (IV), (V), (VI) und (VII), wobei 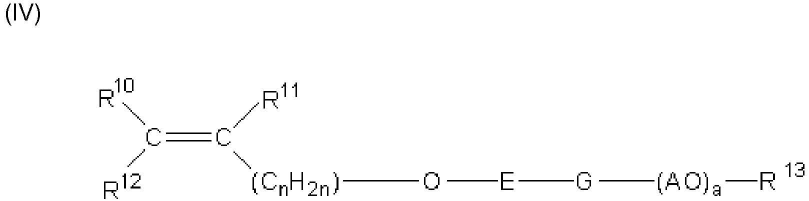 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, insbesondere C₁, C₂, C₃, C₄, C₅ oder C₆ zwar jeweils typisch, jedoch bevorzugt C₂ und C₄, eine Cyclohexylgruppe, CH₂-C₆H₁₀, ortho, meta oder para substituiert vorliegendes C₆H₄ und/oder eine nicht vorhandene Einheit, d.h., dass E nicht vorhanden ist;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt, d.h., dass G nicht vorhanden ist;
A gleich oder verschieden sowie repräsentiert durch CₓH₂ₓ mit x = 2, 3, 4 und/oder 5 bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
R¹³ gleich oder verschieden sowie repräsentiert durch H, eine unverzweigte oder verzweigte C₁ - C₄ Alkylgruppe, CO-NH₂, und/oder COCH₃, bevorzugt H, CH₃; 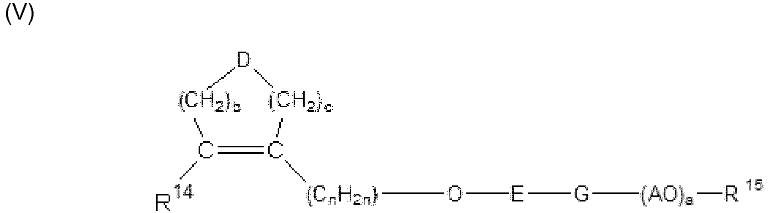 mit
R¹⁴ gleich oder verschieden sowie repräsentiert durch H und/oder eine unverzweigte oder verzweigte C₁ - C₄ Alkylgruppe, bevorzugt H;
E gleich oder verschieden sowie repräsentiert durch eine unverzweigte oder verzweigte C₁ - C₆ Alkylengruppe, bevorzugt C₂H₄, eine Cyclohexylgruppe, CH₂-C₆H₁₀, ortho, meta oder para substituiert vorliegendes C₆H₄ und/oder durch eine nichtvorhandene Einheit, d.h. E ist nicht vorhanden;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit, d.h. G ist nicht vorhanden, vorliegt;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
D gleich oder verschieden sowie repräsentiert durch eine nicht vorhandene Einheit, d.h. D ist nicht vorhanden, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃, bevorzugt H; 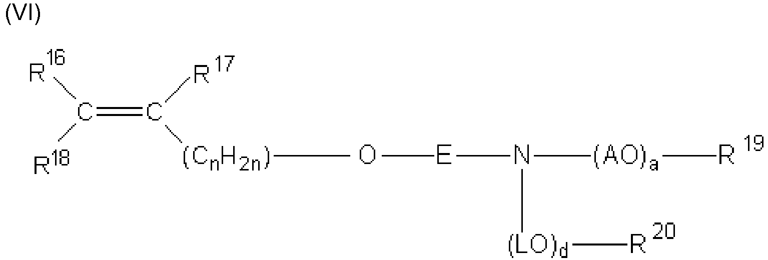 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, bevorzugt C₂H₄ oder C₄H₈, eine Cyclohexylgruppe, CH₂-C₆H₁₀, ortho, meta oder para substituiert vorliegendes C₆H₄ und/oder durch eine nicht vorhandene Einheit, d.h. E ist nicht vorhanden;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5, bevorzugt x = 2 und/oder CH₂-CH(C₆-H₅);
a gleich oder verschieden sowie repräsentiert durch eine ganze Zahl von 2 bis 350, bevorzugt 10 - 200;
d gleich oder verschieden sowie repräsentiert durch eine ganze Zahl von 1 bis 350, bevorzugt 10 - 200;
R¹⁹ gleich oder verschieden sowie repräsentiert durch H und/oder eine unverzweigte oder verzweigte C₁ - C₄ Alkylgruppe, bevorzugt H,
R²⁰ gleich oder verschieden sowie repräsentiert durch H und/oder eine unverzweigte C₁ - C₄ Alkylgruppe, bevorzugt H. 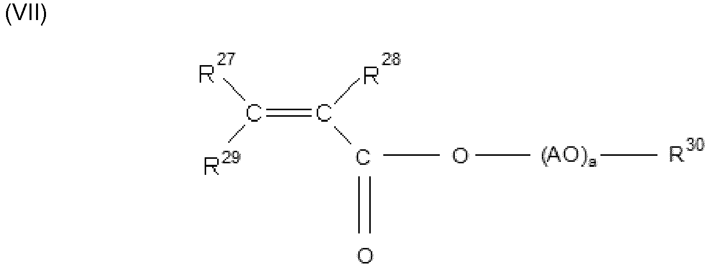 worin
R²⁷, R²⁸ und R²⁹ gleich oder verschieden sind und unabhängig voneinander für H stehen und/oder einen unverzweigten oder verzweigten C₁ - C₄ verzweigten Alkylgruppenrest stehen;
A sind gleich oder verschieden und bedeuten CₓH₂ₓ mit x = 2, 3, 4 und/oder 5 und/oder CH₂CH(C₆H₅);
a sind gleich oder verschieden und stehen für eine ganze Zahl zwischen 2 und 350;
R³⁰ sind gleich oder verschieden und stehen für H und/oder einen unverzweigten oder verzweigten C₁ -C₄ Alkylrest.

Allgemein kann gesagt werden, dass die Poly-Alkoxyseitenketten (AO)ₐ der Polyethermakromonomere besonders bevorzugt reine Poly-Ethoxyseitenketten sind, wobei jedoch weiterhin bevorzugt auch gemischte Poly-Alkoxyseitenketten, insbesondere solche, die sowohl Propoxy- als auch Ethoxy-Gruppen enthalten, vorliegen können.

In der Praxis wird häufig als Polyethermakromonomer alkoxyliertes Isoprenol, also alkoxyliertes 3-Methyl-3-buten-1-ol und/oder alkoxylierter Hydroxybutylvinylether und/oder alkoxylierter (Meth)allylalkohol, wobei Allylalkohol bevorzugt gegenüber Methallylalkohol ist, mit normalerweise jeweils einer arithmetisch mittleren Zahl an Oxyalkylengruppen von 4 bis 350 eingesetzt. Besonders bevorzugt ist alkoxylierter Hydroxybutylvinylether.

Neben dem Monomeren (I) und (II) können noch weitere Monomertypen in dem erfindungsgemäßen Copolymer zum Einsatz kommen. In einer besonders bevorzugten Ausführungsform umfasst das erfindungsgemäße Copolymer jedoch als Monomere kein Styrol oder Derivate des Styrols.

Der molare Anteil der Monomere (I) und (II) in dem erfindungsgemäßen Copolymer kann in weiten Bereichen frei gewählt werden. Als besonders vorteilhaft hat es sich erwiesen, wenn der Anteil des Monomeren (I) an dem Copolymer 5 bis 95 Mol-%, bevorzugt 30 bis 95 Mol-% und insbesondere 55 bis 95 Mol-% beträgt. In einer weiterhin bevorzugten Ausführungsform beträgt der Anteil des Monomeren (II) an dem Copolymer 1 bis 89 Mol-%, insbesondere 1 bis 55 Mol-% und besonders bevorzugt 1 bis 30 Mol-%.

Es ist hierbei als bevorzugt anzusehen, dass das Monomer (II) ein Molekulargewicht von 500 bis 10.000 g/mol aufweist.

In einer weiterhin bevorzugten Ausführungsform besitzt das erfindungsgemäße Copolymer ein Molekulargewicht von 12.000 bis 75.000 g/mol, bestimmt durch Gelpermeationschromatographie gegen Polyethylenglykol Standards.

Als Lösungsmittel bei der Herstellung der erfindungsgemäßen Copolymere ist insbesondere Wasser geeignet. Es besteht aber auch die Möglichkeit ein Gemisch aus Wasser und einem organischen Lösungsmittel einzusetzen, wobei sich das Lösungsmittel bezüglich radikalischer Polymerisationsreaktionen weitestgehend inert verhalten sollte. Hinsichtlich der organischen Lösungsmittel sind insbesondere die bereits oben genannten organischen Lösungsmittel als besonders geeignet zu betrachten.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder chemische Polymerisationsinitiatoren wie organische Peroxide, z. B. Benzoylperoxid, tert.-Butylhydroperoxid, Methylethylketonperoxid, Cumoylperoxid, Dilauroylperoxid oder Azoinitiatoren, wie z. B. Azodiisobutyronitril, Azobisamidopropyl-hydrochlorid und 2,2'-Azobis(2-methylbutyronitril) verwendet werden. Ebenfalls geeignet sind anorganische Peroxyverbindungen, wie z. B. Ammoniumperoxodisulfat, Kaliumperoxodisulfat oder Wasserstoffperoxid, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten. Insbesondere bevorzugt handelt es sich um eine Mischung aus mindestens einer Sulfinsäure mit mindestens einem Eisen(III)-Salz und/oder um eine Mischung aus Ascorbinsäure mit mindestens einem Eisen(III)-Salz.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

Die erfindungsgemäßen Copolymere können auch durch polymeranaloge Umsetzungen hergestellt werden. Dabei wird ein Polymer, welches latente oder freie Carboxylgruppen enthält mit ein oder mehreren Verbindungen, die Amin- oder Hydroxylfunktionen enthalten unter Bedingungen umgesetzt, die zu teilweiser Amidierung beziehungsweise Veresterung der Carboxylgruppen führen.

Die flüssige wasserhaltige Komponente kann auch organische Lösungsmittel enthalten. Insbesondere kann die flüssige wasserhaltige Komponente weniger als 30 Gew.-% eines organischen Lösungsmittels, bevorzugt weniger als 10 Gew.-% und insbesondere kein organisches Lösungsmittel enthalten. Als organisches Lösungsmittel können bevorzugt alle organischen Lösungsmittel dienen, in welchen das erfindungsgemäße Copolymer eine gute Löslichkeit aufweist. Die Löslichkeit des Copolymers ist von den konkret gewählten Monomeren und den Mengenverhältnissen der eingesetzten Monomere abhängig und kann durch einfache Versuche ermittelt werden. Insbesondere handelt es sich um mindestens ein Lösungsmittel aus der Reihe Ethylacetat, n-Butylacetat, 1-Methoxy-2-propylacetat, Ethanol, i-Propanol, n-Butanol, 2-Ethylhexanol, 1-Methoxy-2-propanol, Ethylenglykol, Propylenglykol, Aceton, Butanon, Pentanon, Hexanon, Methylethylketon, Ethylacetat, Butylacetat, Amylacetat, Tetrahydrofuran, Diethylether, Toluol, Xylol oder höher siedende Alkylbenzole. Weiterhin kann es sich um Polyethylenglykolether oder Polypropylenglykolether oder statistische Ethylenoxid/Propylenoxid-Copolymere mit einer mittleren Molmasse zwischen 200 und 2000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- und/oder Propylenglykoleinheiten, beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20000 g/mol, Pentaerythritolalkxylate, Ethylencarbonat, Propylencarbonat, Glycerincarbonat, Glycerinformal und 2,3-O-Isopropylidenglycerin. Insbesondere bevorzugt handelt es sich um Alkylpolyalkylenglykolether und besonders bevorzugt Methylpolyethylenglykolether sowie Polyethylenglykolether, Polypropylenglykolether und statistische Ethylenoxid/Propylenoxid-Copolymere mit einer mittleren Molmasse zwischen 200 und 2000 g/mol. Weiterhin bevorzugt sind Lösungsmittel auf Basis von Carbonaten, insbesondere Ethylencarbonat, Propylencarbonat und Glycerincarbonat. Besonders bevorzugt enthält die flüssige wasserhaltige Komponente kein Lösungsmittel.

Der Wassergehalt der erfindungsgemäße flüssigen wasserhaltigen Komponente beträgt bevorzugt > 5 Gew.-%, insbesondere > 30 Gew.-%. Insbesondere kann der Wassergehalt zwischen 10 und 99 Gew.-%, vorzugsweise zwischen 15 und 70 Gew.-% und besonders bevorzugt zwischen 20 und 50 Gew.-% der flüssigen Komponente betragen.

Um eine möglichst schnelle Suspendierbarkeit der erfindungsgemäßen pulverförmigen Zusammensetzung zu erreichen ist es vorteilhaft, wenn das mindestens eine erfindungsgemäße Copolymer in der flüssigen wasserhaltigen Komponente zu einem Anteil von mindestens 50 Gew.-%, bevorzugt mindestens 80 Gew.-% und besonders bevorzugt mindestens 99 Gew.-% in gelöster Form vorliegt. Insbesondere liegt das Copolymer in der flüssigen Komponente gelöst vor.

Das in Kontakt bringen der Pulverkomponente mit der flüssigen Komponente, enthaltend das erfindungsgemäße Copolymer, kann auf jede dem Fachmann hierfür bekannte Art geschehen. Als besonders geeignet hat es sich erwiesen, wenn die flüssige Komponente durch Aufsprühen oder Bedüsen mit der Pulverkomponente in Kontakt gebracht wird. Bevorzugt umfasst das Verfahren einen Mischschritt, wobei die Pulverkomponente während und/oder nach dem in Kontakt bringen mit der flüssigen wasserhaltigen Komponente einem Mischschritt unterworfen wird. Auf diese Weise kann der homogene Auftrag in einfacher Weise bei gleichzeitig guter Haftung und Anfangsadhäsion gewährleistet werden. Selbstverständlich kann das in Kontakt bringen der Pulverkomponente mit der flüssigen Komponente auch auf jede andere geeignete Art und Weise erfolgen. In Frage kommen hier insbesondere auch das Abmischen bzw. Unterrühren, wobei jedoch der Sprühauftrag eindeutig zu bevorzugen ist, da dies die einfachste und wirtschaftlich attraktivste Auftragungsvariante darstellt.

In einer besonders bevorzugten Ausführungsform können der flüssigen wasserhaltigen Komponente, je nach Verwendungszweck, auch noch weitere Additive zugemischt werden, wobei diese bevorzugt in gelöster Form vorliegen. Insbesondere kann die flüssige Komponente bezogen auf die Gesamtmischung 0,5 bis 95 Gew.-%, insbesondere 1 bis 50 Gew.-% mindestens eines weiteren Additivs enthalten. Hierdurch kann die pulverförmige Zusammensetzung in einfacher Weise mit weiteren Additiven versetzt werden, was eine besonders wirtschaftliche Vorgehensweise darstellt. Durch die besonders homogene Verteilung des weiteren Additivs kann dessen Effekt direkt nach dem Anmachen mit Wasser verbessert werden, was als weiterer Vorteil dieser Ausführungsform zu sehen ist.

In einer weiterhin bevorzugten Ausführungsform besteht die flüssige wasserhaltige Komponente aus einer Lösung des erfindungsgemäßen Copolymers in Wasser.

Es ist bevorzugt, wenn die pulverförmige Zusammensetzung eine mittlere Teilchengröße zwischen 0,1 und 1000 µm, besonders bevorzugt zwischen 1 und 200 µm aufweist. Die Teilchengröße wird hierbei bevorzugt durch Laserdiffraktometrie bestimmt.

Das auf Calciumsulfat basierende Bindemittel kann in verschiedenen Hydratstufen vorliegen. Als erfindungsgemäße Bindemittel sind α-Calciumsulfathalbhydrat, ß-Calciumsulfathalbhydrat und das kristallwasserfreie Anhydrit, bzw. Mischungen der genannten Bindemittel bevorzugt. Besonders bevorzugt ist β-Calciumsulfathalbhydrat und insbesondere β-Calciumsulfathalbhydrat enthaltend Anhydrit, insbesondere Anhydrit III. Auch kann Anhydritstaub (feingemahlenes Anhydrit) zum Einsatz kommen, welches relativ reaktionsträge ist und nur teilweise abbindet.

Der Ausdruck "Gips" wird im vorliegenden Zusammenhang synonym mit Calciumsulfat verwendet, wobei das Calciumsulfat in seinen unterschiedlichen wasserfreien und hydratisierten Formen mit und ohne Kristallwasser vorliegen kann. Natürlicher Gips umfasst im Wesentlichen Calciumsulfat-Dihydrat ("Dihydrat"). Die natürliche kristallwasserfreie Form von Calciumsulfat ist vom Ausdruck "Anhydrit" umfasst. Neben den natürlichen Erscheinungsformen stellt Calciumsulfat ein typisches Nebenprodukt technischer Prozesse dar, worunter dann "synthetischer Gips" verstanden wird. Ein typisches Beispiel für einen synthetischen Gips aus technischen Prozessen ist die Abgasentschwefelung. Synthetischer Gips kann aber auch gleichermaßen das Nebenprodukt von Phosphorsäure- oder Flusssäure-Herstellungsverfahren entstehen. Typischer Gips (CaSO x 2 H₂O) kann calziniert werden, indem das Kristallwasser abgetrennt wird. Produkte der unterschiedlichsten Calzinierungsverfahren sind α- oder β-Halbhydrat.

β-Calciumsulfathalbhydrat resultiert aus einer raschen Erhitzung in offenen Gefäßen, bei einer gleichzeitig schnellen Verdampfung von Wasser unter Bildung von Hohlräumen. α-Calciumsulfathalbhydrat kann durch die Entwässerung von Gips in geschlossen Autoklaven hergestellt werden. Die Kristallform in diesem Fall ist relativ dicht, weshalb dieses Bindemittel weniger Wasser zur Verflüssigung benötigt als ß-Calciumsulfathalbhydrat. Auf der anderen Seite rehydriert Halbhydrat mit Wasser zu Dihydrat-Kristallen. Üblicherweise ist für die Hydratation von Gips ein Zeitbedarf von einigen Minuten bis Stunden notwendig, woraus eine verkürzte Verarbeitungszeit im Vergleich zu Zementen resultiert, die zur vollständigen Hydratation mehrere Stunden bis Tage benötigen. Diese Eigenschaften machen Gips zu einer brauchbaren Alternative zu Zementen als Bindemittel in den verschiedensten Anwendungsgebieten. Außerdem zeigen ausgehärtete Gipsprodukte eine ausgeprägte Härte und Druckfestigkeit.

Für die unterschiedlichsten Anwendungsgebiete wird β-Calciumsulfathalbhydrat ausgewählt, weil dieser besser verfügbar ist, und unter wirtschaftlichen Gesichtspunkten zahlreiche Vorteile zeigt. Allerdings werden diese Vorteile dadurch zum Teil wieder aufgehoben, dass β-Calciumsulfathalbhydrat bei der Verarbeitung einen höheren Wasserbedarf hat, um überhaupt fließfähige Slurrys zu erzielen. Zudem neigen die hieraus hergestellten getrockneten Gipsprodukte zu einer gewissen Schwäche, welche auf Restwassermengen zurückzuführen sind, die in der Kristallmatrix beim Aushärten verblieben sind. Aus diesem Grund zeigen entsprechende Produkte eine geringere Härte als Gipsprodukte, die mit geringeren Mengen an Anmachwasser zubereitet worden sind.

Besonders bevorzugt handelt es sich deshalb im Sinne der vorliegenden Erfindung bei Gips um β-Calciumsulfathalbhydrat. Erfindungsgemäßes β-Calciumsulfathalbhydrat ist hierbei insbesondere zur Verwendung in gipsbasierten Fließestrich geeignet.
Eine Formulierung von gipsbasierten Fließestrichen ist bislang nur mit Bindemitteln auf Basis von Anhydrit oder α-Calciumsulfathalbhydrat möglich. Bei dieser Art von Bindemitteln handelt es sich um Modifikationen des Gipses, die einen sehr niedrigen Wasseranspruch aufweisen und damit hochfeste Binder sind. Allerdings weisen beide Komponenten sowohl preislich als auch in ihrer Verfügbarkeit deutliche Nachteile gegenüber β-Calciumsulfathalbhydrat auf. Die Verwendung von β-Calciumsulfathalbhydrat dagegen ist nach dem Stand der Technik nicht möglich, da aufgrund des hohen Wasseranspruchs die daraus resultierenden Festigkeiten zu gering sind, um einen Fließestrich in ausreichender Qualität zu produzieren.
Es hat sich gezeigt, dass Fließmittel auf Basis von Ligninsulfonat, Melaminsulfonat und Polynaphthalinsulfonat nicht in der Lage sind den Wasseranspruch von β-Calciumsulfathalbhydrat ausreichend zu reduzieren.
Der Einsatz von Polycarboxylatethern ermöglicht eine ausreichende Wasserreduktion, allerdings ist die Entfaltungsgeschwindigkeit von Polycarboxylatethern, die dem Stand der Technik entsprechen, zu gering für maschinenapplizierte Fließestriche.
Bei der Verarbeitung einer derartigen Estrichmischung mit einer Maschine kommt es zu Beginn zu einem starken Viskositätsaufbau, so dass die Mischung entweder nicht homogen zu verarbeiten ist oder aber der Verarbeiter auf der Baustelle die Viskosität mit der Zugabe von Wasser ausgleicht, wodurch es zu Separation der Masse kommt. Darüber hinaus führt das überschüssige, später verdunstende Wasser zu einer signifikant verschlechterten mechanischen Festigkeit, Beständigkeit und Dauerhaftigkeit. Maschinenapplizierte gipsbasierte Fließestriche auf Basis von erfindungsgemäßem β-Calciumsulfathalbhydrat lassen sich hingegen wie die im Stand der Technik bekannten gipsbasierten Fließestriche auf Basis von Anhydrit oder α-Calciumsulfathalbhydrat verarbeiten und weisen eine vergleichbare oder sogar bessere mechanische Festigkeit, Beständigkeit und Dauerhaftigkeit auf.

Ein weiterer Nachteil bei der Verwendung von β-Calciumsulfathalbhydrat besteht darin, dass es häufig bei der Herstellung des Bindemittels durch rasche Erhitzung zu einem "Überbrennen" kommt bei der Anhydrit III entsteht, welcher durch Kontakt mit Wasser oder Luftfeuchtigkeit wieder zum Halbhydrat reagiert. Dies hat zur Folge, dass das frisch gebrannte Bindemittel einen höheren Wasseranspruch aufweist als das gleiche Bindemittel, welches längere Zeit gelagert wurde. Dieser Alterungseffekt, der sich durch einen veränderten Wasseranspruch äußert kann dadurch künstlich beschleunigt werden, daß das Bindemittel, z.B. β-Calciumsulfathalbhydrat, direkt nach dem Brennprozess mit Wasser in Berührung kommt, so dass der Anhydrit III unmittelbar zum Halbhydrat umgesetzt wird.

Bringt man zur Herstellung die frisch gebrannte Pulverkomponente in Form von β-Calciumsulfathalbhydrat mit der erfindungsgemäßen flüssigen Komponente, enthaltend das Copolymer in Kontakt, z.B. durch Bedüsen, kann dieser Alterungseffekt unmittelbar erreicht werden, was sich wiederum positiv in einem geringerem Wasseranspruch des Bindemittels äußert. Es ist deshalb als besonders vorteilhaft anzusehen, dass das auf Calciumsulfat basierende Bindemittel der Pulverkomponente frisch gebranntes β-Calciumsulfathalbhydrat umfasst.

Die vorstehend genannten auf Calciumsulfat basierenden Bindemittel werden bei Wasserzugabe hydratisiert, wobei Calciumsulfatdihydrat entsteht. Calciumsulfatdihydrat bildet nadelförmige Kristalle aus, welche ineinander wachsen und aneinander haften. Dadurch können Gipsprodukte von ausgeprägter Härte und Druckfestigkeit erhalten werden.

Bevorzugt enthält die pulverförmige Zusammensetzung, bezogen auf die Gesamtmasse der Zusammensetzung, zwischen 85 und 99,99 Gew.-% des Calciumsulfat basierenden Bindemittels.
Weiterhin vorgesehen ist die Verwendung einer erfindungsgemäßen Zusammensetzung als Bindemittel für Gipskartonplatten, Estriche, standfeste oder selbstverlaufende Spachtelmassen, Putze und Abformmassen.

Ein weiterer Aspekt der vorliegenden Erfindung ist eine Bindemittelzusammensetzung, umfassend eine erfindungsgemäße pulverförmige Zusammensetzung sowie mindestens ein weiteres Bindemittel aus der Reihe Zement auf Basis Portlandzement, Weißzement, Calciumaluminatzement, Calciumsulfoaluminatzement und latent hydraulische bzw. puzzolanische Bindemittel. In einer bevorzugten Ausführungsform kann es sich bei den erfindungsgemäßen Zusammensetzungen bei den weiteren Bindemitteln um ein Gemisch aus Portlandzement und Calciumaluminatzement handeln, wobei als Calciumaluminatzement insbesondere Tonerdeschmelzzement eingesetzt werden kann.

Im Sinne der vorliegenden Erfindung wird die erfindungsgemäße pulverförmige Zusammensetzung mit dem mindestens einen weiteren Bindemittel und ggf. mit Füllstoffen und/oder Additiven gemischt, um hierdurch beispielsweise Mauermörtel, Putzmörtel, Fugenmörtel, Fliesenkleber, Dünnbettmörtel, Estrichmörtel, Vergussmörtel, Einpressmörtel, Spachtelmassen oder Auskleidungsmörtel (z. B. für Trinkwasserrohre) zu erhalten. Eine besonders schnelle homogene Dispergierbarkeit der so hergestellten Zusammensetzungen mit Wasser wird auch durch dieses Vorgehen erreicht.

Bei der erfindungsgemäßen Bindemittelzusammensetzung handelt es sich bevorzugt um einen Werktrockenmörtel. Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem Bindemittel, welches bspw. Zement und/oder Kalk und/oder Calciumsulfat enthalten kann, weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Verdicker, Entschäumer, Luftporenbildner, Korrosionsinhibitoren und Hydrophobierungsmittel handeln.

In einer besonderen Ausführungsform kann es sich bei dem erfindungsgemäßen Werktrockenmörtel auch um eine selbstnivellierende Verlaufsmasse handeln. Dies ist besonders vorteilhaft, da solche pulverförmigen Zusammensetzungen für geringe Schichtdicken in der Regel sehr fein sind und sich daher vergleichsweise langsam mit Wasser anmischen lassen.

Ebenso eingeschlossen sind Werktrockenmörtel, welche bei der Herstellung auf der Baustelle außer mit Wasser auch noch mit weiteren Komponenten, insbesondere flüssigen und/oder pulverförmigen Additiven und/oder mit Gesteinskörnung versehen werden können (Zweikomponenten Systeme).

Ein weiterer Gegenstand der vorliegenden Erfindung ist die Verwendung einer flüssigen, weniger als 30 Gew.-% eines organischen Lösungsmittels enthaltenden wasserhaltigen Komponente, umfassend ein Copolymer, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
   und
(II) mindestens ein ethylenisch ungesättigtes Monomer mit
   einem Polyalkylenether-Rest,
zum Aufsprühen oder Bedüsen auf eine Pulverkomponente, umfassend ein auf Calciumsulfat basierendes Bindemittel, zur Beschleunigung der homogenen Dispergierung des Produktes mit Wasser.

Unter "Produkt" ist hierbei sowohl das durch Aufsprühen oder Bedüsen auf eine Pulverkomponente direkt erhaltene Produkt als auch ein Produkt zu verstehen, welches durch nachfolgende Mischung dieses Produktes mit weiteren Komponenten, insbesondere weiteren Bindemitteln, Füllstoffen, Additiven bzw. Zusatzmitteln erhalten wird. Insbesondere bevorzugt handelt es sich bei dem Monomer (I) wiederum um die bereits oben angeführten Verbindungen der Formel (la), (Ib)und (Ic) und bei dem Monomer (II) um die bereits oben angeführte Verbindung der Formel (II).

Die nachfolgenden Beispiele sollen die Erfindung näher erläutern.

### Beispiele:

### Zusammensetzung des erfindungsgemäßen Copolymers

Die Synthese des verwendeten Copolymers ist zum Beispiel in WO2006133933 Seite 12, Zeile 5 bis Seite 13, Zeile 26 beschrieben. Das verwendete Copolymer hat folgende Zusammensetzung:

### Copolymer 1

| Mol Acrylsäure | Mol Makromonomer | Makromonomer | Mw (g/mol) | Feststoff % |
|---|---|---|---|---|
| 5 | 1 | VOBPEG-3000 | 32.000 | 50 |

Die Abkürzung VOBPEG-3000 steht für Vinyl-oxy-butyl-polyethylenglykol mit einer molaren Masse von 3000 g/mol.

### Fließmaßbestimmung

### Herstellung erfindungsgemäße pulverförmige Zusammensetzung:

1 kg β-Calciumsulfathalbhydrat (β-HH) wird im Zwangsmischer vorgelegt. Während das Material mit 950 Umdrehungen pro Minute (Upm) gemischt wird, erfolgt bei Raumtemperatur innerhalb von 25 Sekunden das Aufsprühen von 20 g einer 50 Gew.-%igen wässrigen Lösung des Copolymers 1 (Wirkstoffgehalt: 0,1 % bezogen auf β-HH). Anschließend wird 90 Sekunden nachgemischt. Nach einer kurzen Mischpause von wenigen Sekunden wird die Mischung nochmals für weitere 120 Sekunden gerührt.

### Beispiel 1

Verwendung der erfindungsgemäßen pulverförmigen Zusammensetzung als Bindemittel in einer Gipsslurry (Calciumsulfatleim).

### Beispiel 2

Verwendung der erfindungsgemäßen pulverförmigen Zusammensetzung als Bindemittel in einer Abmischung mit Kalksteinmehl (Omyacarb 130 AL) im Verhältnis 1:1.

### Vergleichsbeispiel 1

Verwendung von unbehandeltem β-HH als Bindemittel einer Gipsslurry (zur Ermittlung des Blindwerts basierend auf der Mischung aus Wasser und β-HH ohne Fließmittel).

### Vergleichsbeispiel 2

Gipsslurry, basierend auf unbehandeltem β-HH, bei der die oben genannte 50 Gew.-%ige wässrige Lösung des Copolymers 1 dem Anmachwasser hinzugefügt wird.

### Vergleichsbeispiel 3

Gipsslurry, basierend auf unbehandeltem β-HH, bei der das Copolymer 1 als Pulver zum β-HH zugegeben wird.

### Vergleichsbeispiel 4

Verwendung von unbehandeltem β-HH als Bindemittel in einer Abmischung mit Kalksteinmehl (Omyacarb 130 AL) im Verhältnis 1:1 (zur Ermittlung des Blindwerts der Abmischung von unbehandeltem ß-HH mit Kalksteinmehl ohne Fließmittel).

### Vergleichsbeispiel 5

Abmischung von unbehandeltem β-HH mit Kalksteinmehl (Omyacarb 130 AL) im Verhältnis 1:1, bei der die oben genannte 50 Gew.-%ige wässrige Lösung des Copolymers 1 dem Anmachwasser hinzugefügt wird.

### Vergleichsbeispiel 6:

Abmischung von unbehandeltem β-HH mit Kalksteinmehl (Omyacarb 130 AL) im Verhältnis 1:1, bei der das Copolymer 1 als Pulver zur Trockenkomponente zugegeben wird.

### Anwendungsbeispiele:

Untersuchung des Fließverhaltens der erfindungsgemäßen pulverförmigen Zusammensetzung als reine Gipsslurry oder als Abmischung der erfindungsgemäßen pulverförmigen Zusammensetzung mit Kalksteinmehl (Typ Omyacarb 130AL).

### Allgemeines Anwendungsbeispiel 1:

Für die Herstellung der Gipsslurrys werden jeweils 300 g β-HH verwendet. Die entsprechend einem Verhältnis von Wasser zu Bindemittel (W/G-Wert) von 0,59 benötigte Menge Wasser, welche anhand der unbehandelten Gipslurry ermittelt wurde (Vergleichsbeispiel 1), wird in einem Mischtopf (Mischer nach DIN EN 196-1) vorgelegt und anschließend wird das β-HH vorsichtig in das Wasser eingestreut. Im Fall von Beispiel 1 enthält das ß-HH bereits die benötigte Fließmittelmenge von 0,1 Gew.-% (Copolymer 1), im Fall der Vergleichsbeispiele 2) und 3) wird das Copolymer 1 separat flüssig im Anmachwasser oder als Pulver zugegeben, so dass ebenfalls eine Wirkstoffkonzentration von 0,1 Gew.-% gegeben ist, bezogen auf das eingesetzte β-HH. Weiterhin enthalten alle Mischungen 0,08 Gew.-% Retardan P bezogen auf die eingesetzte Menge des β-HH. Es wird für 15 Sekunden bei Stufe 1 gerührt und anschließend 15 weitere Sekunden auf Stufe 2.
Zur Ermittlung des Fließverhaltens werden die Mischungen in einen Konus (5 cm Innendurchmesser und 10 cm Höhe) eingefüllt und nach einer Dauer (inklusive Mischvorgang) von 60 Sekunden das Fließmaß bestimmt.
Die Ergebnisse der Anwendungstests gemäß dem Beispiel 1 und den Vergleichsbeispielen 1 bis 3 werden in folgender Tabelle 1 dargestellt:

**Tabelle 1: Untersuchung des Fließverhaltens in einer Gipsslurry**

| | Blindwert (Vergleichsbeispiel 1) | Gipsslurry +0,1 Gew.-% Copolymer 1 als Pulver (Vergleichsbeispiel 3) | Gipsslurry + 0,1 Gew.-% Copolymer 1 Lösung (Vergleichsbeispiel 2) | Gipsslurry erfindungsgemäßes ß-HH (Beispiel 1) |
|---|---|---|---|---|
| ß-HH (g) | 300 | 300 | 300 | 300 |
| Gew.-% Fließmittel bezogen auf ß-HH | 0 | 0,1 | 0,1 | 0,1 |
| W/G-Wert | 0, 59 | 0, 59 | 0, 59 | 0,59 |
| Fließmaß (cm) | 14,8 | 19,3 | 21 | 25,9 |

Beispiel 1, enthaltend die erfindungsgemäße pulverförmige Zusammensetzung, zeigt eine deutliche Erhöhung des Fließmaßes von 75% gegenüber dem Blindwert und 23% bzw. 34% gegenüber der Verwendung des Fließmittels im Anmachwasser bzw. als Pulver.

### Anwendungsbeispiel 2:

Jeweils 500 g bestehend aus einer 1:1 Abmischung von β-HH mit Kalksteinmehl werden in einem Mischtopf eines Zwangsmischers vorgelegt. Es wird für 60 Sekunden bei 950 Upm gerührt, wobei die entsprechend einem W/G-Wert von 0,87 benötigte Menge Wasser, welche anhand der Mischung ohne Fließmittel ermittelt wurde (Vergleichsbeispiel 4) nach 5-10 Sekunden zugegeben wird. Im Fall von Beispiel 2 enthält die Abmischung bereits die benötigte Fließmittelmenge von 0,1 Gew.-% (Copolymer 1) bezogen auf β-HH. Im Fall der Vergleichsbeispiele 5 und 6 wird Copolymer 1 separat flüssig im Anmachwasser oder als Pulver, ebenfalls in einer Wirkstoffkonzentration von 0,1 Gew.-% bezogen auf ß-HH. Weiterhin enthalten alle Mischungen 0,08 Gew.-% Retardan P bezogen auf die eingesetzte Menge β-HH.
Zur Ermittlung des Fließverhaltens werden die Mischungen in einen Konus (5 cm Innendurchmesser und 10 cm Höhe) eingefüllt und nach einer Dauer inklusive Mischvorgang von 120 Sekunden das Fließmaß bestimmt. Die Ergebnisse der Anwendungstests gemäß Beispiel 2 und den Vergleichsbeispielen 4 bis 6 werden in Tabelle 2 dargestellt.

**Tabelle 2: Untersuchung des Fließverhaltens einer 1:1 Abmischung von ß-HH mit Kalksteinmehl**

| | Blindwert (Vergleichsbei-spiel 4) | Mischung + 0,1 Gew.-% Copolymer 1 als Pulver (Vergleichsbeispiel 6) | Mischung + 0,1 Gew.-% Copolymer 1 Lösung (Vergleichsbeispiel 5) | Mischung erfindungsgemäßes ß-HH (Beispiel 2) |
|---|---|---|---|---|
| ß-HH (g) | 250 | 250 | 250 | 250 |
| Kalksteinmehl (g) | 250 | 250 | 250 | 250 |
| Gew.-% Fließmittel bezogen auf ß-HH | 0 | 0,1 | 0,1 | 0,1 |
| W/G-Wert | 0,87 | 0,87 | 0,87 | 0,87 |
| Fließmaß (cm) | 13,9 | 17,2 | 17,3 | 18,9 |

Beispiel 2, enthaltend die erfindungsgemäße pulverförmige Zusammensetzung, zeigt eine deutliche Erhöhung des Fließmaßes von 36% gegenüber dem Blindwert und 10% bzw. 9% gegenüber der Fließmittellösung bzw. des Fließmittels in Pulverform.

### Dispergierung des Produktes mit Wasser

Herstellung erfindungsgemäßer pulverförmiger Zusammensetzung in einer Mühle 250 g β-HH werden in einer Messermühle vom Typ Grindomix der Retsch GmbH vorgelegt. Es wird so viel einer 50 Gew.-%igen wässrigen Lösung des Copolymers 1 auf das Bindemittel mit einer Pipette aufgebracht, dass der Wirkstoffgehalt bezogen auf ß-HH 0,1 Gew.-% beträgt. Das Material mit Fließmittel wird anschließend für 10 Sekunden bei 8000 Upm gemischt. Nach einer kurzen Mischpause von wenigen Sekunden wird die Mischung nochmals für weitere 10 Sekunden gemischt.

### Beispiel 3

Verwendung der erfindungsgemäßen pulverförmigen Zusammensetzung als Bindemittel in einer Abmischung mit Kalksteinmehl (Omyacarb 130 AL) im Verhältnis 1:1.

### Vergleichsbeispiel 7

Abmischung von unbehandeltem ß-HH mit Kalksteinmehl (Omyacarb 130 AL) im Verhältnis 1:1, bei der die 50 Gew.-%ige wässrige Lösung des Copolymers 1 zum Anmachwasser hinzugefügt wird.

### Vergleichsbeispiel 8

Abmischung von unbehandeltem ß-HH mit Kalksteinmehl (Omyacarb 130 AL) im Verhältnis 1:1, bei der das Copolymer 1 als Pulver zur Trockenkomponente zugegeben wird.

### Anwendungsbeispiel 3

500 g einer Mischung bestehend aus 250 g β-HH und 250 g Kalksteinmehl (Omyacarb 130 AL) werden trocken homogenisiert und in einem Mischtopf eines Zwangsmischers vorgelegt. Im Fall von Beispiel 1 ist das Bindemittel bereits mit 0,1 Gew.-% des Copolymers 1 beaufschlagt. Im Fall der Beispiele 2 und 3 wird das Fließmittel flüssig zum Anmachwasser bzw. als Pulver zur Trockenkomponente gegeben. Die Wirkstoffkonzentration beträgt in beiden Fällen ebenfalls 0,1 Gew.-% Copolymer 1 bezogen auf das ß-HH. Die pulverförmige Mischung aus ß-HH, Kalksteinmehl und Copolymer 1 wird für 60 sec bei 950 Upm gerührt, wobei die entsprechend einem W/G-Wert von 0,8 benötigte Menge Wasser nach 5-10 Sekunden zugegeben wird.
Während des Mischvorgangs wird der Zeitraum bestimmt der benötigt wird, um eine homogene Mischung zu erhalten. Die Ergebnisse des Anwendungstests für das Beispiel 3 und die Vergleichsbeispiele 7 und 8 werden in Tabelle 3 dargestellt.

**Tabelle 3: Bestimmung des Zeitbedarfs bis zur homogenen Dispergierung des Produktes mit Wasser (Abmischung aus ß-HH und Kalksteinmehl 1:1)**

| | Gew.-% Copolymer 1 bezogen auf ß-HH | Zeitbedarf (Sekunden)* |
|---|---|---|
| Beispiel 3 (erfindungsgemäß) | 0,1 | 9 |
| Vergleichsbeispiel 7 | 0,1 | 13 |
| Vergleichsbeispiel 8 | 0,1 | 16 |

| | | |
|---|---|---|
| *Zeitbedarf bis eine homogene Dispergierung des Produktes erreicht ist Die erfindungsgemäße pulverförmige Zusammensetzung gemäß Beispiel 3 hat im Hinblick auf Vergleichsbeispiel 7 bzw. 8 einen um 31% bzw. 44% geringeren Zeitbedarf bis eine homogene Dispergierung des Produktes erreicht ist. art. | | |

## Patentansprüche

1. Pulverförmige Zusammensetzung umfassend, bezogen auf die Gesamtmasse der Zusammensetzung
A) mindestens 20 Gew.-% eines auf Calciumsulfat basierenden Bindemittels und
B) 0,01 bis 4 Gew.-%, mindestens eines Copolymers,
welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(II) mindestens ein ethylenisch ungesättigtes Monomer mit einem Polyalkylenoxid-Rest,
wobei die pulverförmige Zusammensetzung durch ein Verfahren herstellbar ist bei dem eine Pulverkomponente, umfassend ein auf Calciumsulfat basierendes Bindemittel, mit einer flüssigen wasserhaltigen, weniger als 30 Gew.-% eines organischen Lösungsmittels enthaltenden Komponente, umfassend B) in Kontakt gebracht wird, wobei die flüssige wasserhaltige Komponente in einer Menge von weniger als 20 Gew.-% eingesetzt wird, bezogen auf die Gesamtmasse der pulverförmigen Zusammensetzung und die pulverförmige Zusammensetzung kein hydraulisches Bindemittel umfasst.

2. Pulverförmige Zusammensetzung nach Anspruch 1, **dadurch gekennzeichnet, dass** das auf Calciumsulfat basierende Bindemittel der Pulverkomponente Anhydrit und/oder β-Calciumsulfathalbhydrat umfasst.

3. Pulverförmige Zusammensetzung nach Anspruch 1 oder 2, **dadurch gekennzeichnet, dass** das Verfahren, nach der Zugabe der flüssigen wasserhaltigen Komponente, keinen physikalischen Trocknungsschritt umfasst.

4. Pulverförmige Zusammensetzung nach Anspruche 1 bis 3, **dadurch gekennzeichnet, dass** das ethylenisch ungesättigte Monomer (I) durch mindestens eine der folgenden allgemeinen Formeln aus der Gruppe (Ia), (Ib) und (Ic) repräsentiert wird 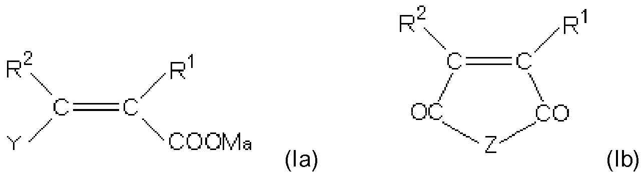 wobei
R¹ und R² unabhängig voneinander für Wasserstoff oder einen aliphatischen Kohlenwasserstoffrest mit 1 bis 20 C-Atomen
Y für H, -COOMₐ, -CO-O(C_{q}H_{2q}O)ᵣR³, -CO-NH-(C_{q}H_{2q}O)ᵣ-R³
M für Wasserstoff, ein ein- oder zweiwertiges Metallkation, Ammoniumion oder einen organischen Aminrest
a für ½ oder 1
R³ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR³
stehen, 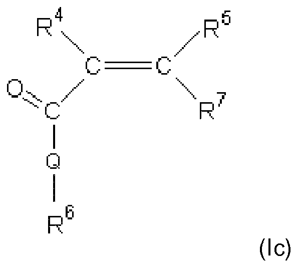 mit
R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
Q gleich oder verschieden sowie repräsentiert durch NH, NR³ oder O; wobei R³ die oben genannte Bedeutung besitzt
R⁶ gleich oder verschieden sowie repräsentiert durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3
R⁷ für H, -COOMₐ, -CO-O(C_{q}H_{2q}O)ᵣ-R³, -CO-NH-(C_{q}H_{2q}O)ᵣ-R³, wobei Mₐ, R³, q und r oben genannte Bedeutungen besitzen
R⁸ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

5. Pulverförmige Zusammensetzung nach einem der Ansprüche 1 bis 4, **dadurch gekennzeichnet, dass** das ethylenisch ungesättigte Monomer (II) durch folgende allgemeine Formeln repräsentiert wird 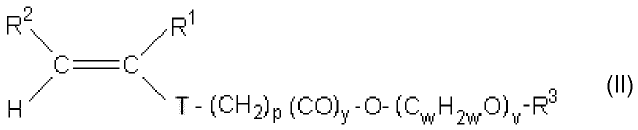 worin
p für eine ganze Zahl zwischen 0 und 6
y für 0 oder 1
v für eine ganze Zahl zwischen 3 und 500
w unabhängig voneinander für jede (C_{w}H_{2w}O)-Einheit gleich oder verschieden für eine ganze Zahl zwischen 2 und 18,
T für Sauerstoff oder eine chemische Bindung,
wobei R¹, R² und R³ die oben genannte Bedeutung besitzen stehen.

6. Pulverförmige Zusammensetzung nach einem der Ansprüche 1 bis 5, **dadurch gekennzeichnet, dass** der Anteil des Monomeren (I) an dem Copolymer 5 bis 95 Mol-% beträgt.

7. Pulverförmige Zusammensetzung nach einem der Ansprüche 1 bis 6, **dadurch gekennzeichnet, dass** der Anteil des Monomeren (II) an dem Copolymer 1 bis 89 Mol-% beträgt.

8. Pulverförmige Zusammensetzung nach einem der Ansprüche 1 bis 7, **dadurch gekennzeichnet, dass** die pulverförmige Zusammensetzung, bezogen auf die Gesamtmasse der Zusammensetzung, zwischen 85 und 99,99 Gew.-% des Calciumsulfat basierten Bindemittels umfasst.

9. Pulverförmige Zusammensetzung nach einem der Ansprüche 1 bis 8, **dadurch gekennzeichnet, dass** die flüssige wasserhaltige Komponente durch Aufsprühen oder Bedüsen mit der Pulverkomponente in Kontakt gebracht wird.

10. Pulverförmige Zusammensetzung nach einem der Ansprüche 1 bis 9, **dadurch gekennzeichnet, dass** die Pulverkomponente während und/oder nach dem in Kontakt bringen mit der flüssigen wasserhaltigen Komponente einem Mischprozess unterworfen wird.

11. Verwendung einer Zusammensetzung nach einem der Ansprüche 1 bis 10 als Bindemittel für Gipskartonplatten, Estriche, standfeste oder selbstverlaufende Spachtelmassen, Putze und Abformmassen.

12. Bindemittelzusammensetzung, umfassend eine pulverförmige Zusammensetzung nach einem der Ansprüche 1 bis 10 sowie mindestens ein weiteres Bindemittel aus der Reihe Zement auf Basis Portlandzement, Weißzement, Calciumaluminatzement, Calciumsulfoaluminatzement und latent hydraulische bzw. puzzolanische Bindemittel.

13. Bindemittelzusammensetzung umfassend eine pulverförmige Zusammensetzung nach Anspruch 12, **dadurch gekennzeichnet, dass** es sich um einen Werktrockenmörtel handelt.

14. Verwendung einer flüssigen, weniger als 30 Gew.-% eines organischen Lösungsmittels enthaltenden wasserhaltigen Komponente, umfassend ein Copolymer, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(II) mindestens ein ethylenisch ungesättigtes Monomer mit einem Polyalkylenether-Rest,
zum Aufsprühen oder Bedüsen auf eine Pulverkomponente, umfassend ein auf Calciumsulfat basierendes Bindemittel, zur Beschleunigung der homogenen Dispergierung des Produktes mit Wasser.
